## Europäisches Patentamt

## European Patent Office

## Office européen des brevets

(19)

(11) Veröffentlichungsnummer: **0 103 072**
**B1**

(12)

# EUROPÄISCHE PATENTSCHRIFT

(45) Veröffentlichungstag der Patentschrift:
01.04.87

(51) Int. Cl.⁴: **B 23 B 13/02**

(21) Anmeldenummer: **83105553.8**

(22) Anmeldetag: **06.06.83**

(54) **Stangenzuführvorrichtung für einen Drehautomaten.**

(30) Priorität: **10.09.82 DE 3233692**
**28.05.83 DE 8315766 U**

(43) Veröffentlichungstag der Anmeldung:
**21.03.84 Patentblatt 84/12**

(45) Bekanntmachung des Hinweises auf die Patenterteilung:
**01.04.87 Patentblatt 87/14**

(84) Benannte Vertragsstaaten:
**CH DE FR GB IT LI**

(56) Entgegenhaltungen:
**DE - A - 3 111 079**
**DE - A - 3 119 075**
**US - A - 4 006 654**

(73) Patentinhaber: **FMB Maschinenbau GmbH,**
**Brandenburger Strasse 7, D-6985 Stadtprozelten (DE)**

(72) Erfinder: **Werkmeister, Johannes, Bahnhofstrasse 2,**
**D-6981 Collenberg (DE)**
Erfinder: **Tietz, Ernst, Richard-Wagner-Strasse 11,**
**D-8761 Bürgstadt (DE)**

(74) Vertreter: **Zinngrebe, Horst, Dr.rer.nat.,**
**Saalbaustrasse 11, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Stangenzuführvorrichtung mit einem in einem Träger gelagerten Führungsrohr und einer in dem Führungsrohr axial beweglichen, mit einem Vorschubantrieb gekoppelten Vorschubstange, deren vorderes Ende ein drehbares Kupplungselement trägt, wobei das Führungsrohr aus einer in dem Träger ausgebildeten Führungsrinne und einem nach oben bewegbaren, sich über die Länge der Führungsrinne erstreckenden Deckel besteht.

Aus der deutschen Offenlegungsschrift 2 919 780 ist es bekannt, für die Beschickung von Stangenmaterial bearbeitenden automatischen Drehbänken eine Vorrichtung zu verwenden, welche ein hinter der Spindel der Drehbank gelegenes und mit dieser fluchtendes Führungsrohr aufweist. In dem Führungsrohr ist jeweils eine von der Drehbank zu bearbeitende Materialstange beherbergt und wird von einem in Längsrichtung des Führungsrohres beweglichen Schieber gesteuert vorgeschoben. Um den Lärm von im Führungsrohr rasch drehenden Materialstangen zu verringern, wird für die Anwesenheit einer gewissen Menge Öl im Rohr gesorgt, wobei das überschüssige Öl an der nicht hermetisch verschlossenen Vorderseite des Führungsrohres austreten kann. Die Beschickung des Führungsrohres mit Öl geschieht durch ein Spiel zwischen dem als Kolben ausgebildeten Schieber und dem Führungsrohr.

Diese Vorrichtung hat den Nachteil, dass zur Beschickung des Führungsrohres jeweils mit einer neuen Materialstange ein erheblicher Raumbedarf erforderlich ist. Das Führungsrohr muss nach dem Rückwärtsfahren des Schiebers entweder zur Seite weggeschwenkt oder soweit zurückgefahren werden, dass eine neue Materialstange in das vordere Ende des Führungsrohres eingeführt werden kann. Man hat versucht, dieses umständliche Beschicken des Führungsrohres mit einer Materialstange dadurch zu vereinfachen, dass anstelle des Führungsrohres ein trommelförmiges Magazin vorgesehen wird, an dessen Umfang mehrere mit Materialstangen beschickte Führungsrohre angeordnet sind. Diese Massnahme ist jedoch nicht nur darin nachteilig, dass die Anzahl der bevorratbaren Materialstangen durch die Dimension der Trommel begrenzt ist, sondern es muss auch eine entsprechende Anzahl von Führungsrohren bereitgestellt werden, von denen nur jeweils eines sich in Arbeitsstellung befindet.

Im übrigen ist für die Durchflutung des bekannten Führungsrohres mit geräuschdämmendem Öl eine Anpassung der lichten Weite des Führungsrohres an den grössten Durchmesser der zu verarbeitenden Materialstange erforderlich. Dies hat zur Folge, dass zur Zuführung von Materialstangen unterschiedlicher Durchmesser auch Führungsrohre entsprechend unterschiedlicher lichter Weiten erforderlich sind.

Aus der DE-OS 2 350 105 ist es zwar bekannt, das Führungsrohr längs zu teilen, wobei der obere Teil des Führungsrohres zur seitlichen Beschickung mit einer Materialstange angehoben werden kann. Bei dieser Vorrichtung tritt trotz schalldämmender Massnahmen durch die in dem geschlossenen Führungsrohr rotierende und auf den Drehautomaten vorgeschobenen Materialstange noch immer ein erheblicher Geräuschpegel auf und bei unrundem Querschnitt verschleisst die Innenkontur des Führungsrohres.

Aus DE-Al-3 111 079 ist eine Zuführungsvorrichtung für stabförmiges Ausgangsmaterial beschrieben, bei der das Führungsrohr für vorgeschobene Materialstangen aus einer Führungsrinne und einem abschwenkbaren Deckel besteht. Beim Vorschub von Materialstangen, deren Durchmesser klein ist im Verhältnis zur lichten Weite des Führungsrohres entsteht ein erheblicher Geräuschpegel, weil die vorgeschobene Materialstange wegen ihrer erheblichen Länge zu Schwingungen angeregt wird und gegen die Wandung des Führungsrohres schlägt.

Mit der Erfindung soll eine Stangenzuführvorrichtung der eingangs genannten Art geschaffen werden, bei der trotz anzustrebender Leichtbauweise der Vorschub von Materialstangen insbesondere von relativ kleinem Durchmesser mit einer wesentlich geringeren Geräuschbelästigung verbunden ist.

Dazu ist bei der genannten Stangenzuführvorrichtung erfindungsgemäss vorgesehen, das wenigstens eine Ölzuflussleitung mit der Führungsrinne, welche aus in Längsrichtung aneinandergesetzten und in den aus einem langgestreckten Profilteil bestehenden Träger angeordneten Kunststoff-Formblöcken besteht, gekoppelt und eine Ölrückflussleitung derart vorgesehen ist, dass während des Vorschubs einer Materialstange im vom schwenkbaren Deckel geschlossenen Führungsrohr der Führungsrinne durch die Ölzuflussleitung Öl zugeführt ist. Das Profilteil ist leicht zu montieren, was dessen Ersatz bei Beschädigung oder Wartungsarbeiten wesentlich erleichtert. Dabei sorgen insbesondere die Kunststoff-Formblöcke für eine ausgezeichnete Schalldämmung, die durch die Ölflutung des geschlossenen Führungsrohres bei rotierender Materialstange noch erheblich verbessert wird. Da sich die Materialstange im ölgefluteten Führungsrohr selbst zentriert, sind selbst bei einem kantigen Materialstangenprofil Beschädigungen der Innenstruktur des Führungsrohres nicht zu befürchten.

Eine weitere Minderung der Geräuschentwicklung wird erreicht, wenn in Weiterbildung der Erfindung der Deckel aus einem Rahmenprofil besteht, unter welchem ein weiterer aus in Längsrichtung aneinandergesetzten Kunststoff-Profilblöcken bestehender Kunststoffstrang befestigt ist, in dessen Unterseite ein Führungskanal ausgebildet ist.

Das Profilteil kann dann so geformt sein, dass es unterhalb des Kunststoffstranges einen Ölzufuhrkanal und einen Ölableitkanal umschliesst, wobei der Ölzufuhrkanal über mehrere Stichkanäle mit der Führungsrinne gekoppelt ist.

Für die Kunststoff-Formblöcke und -Profilblöcke empfiehlt sich besonders Polyurethan als dauerhaftes und geräuschdämmendes Material.

Zur Geräuschdämmung kann das Profilteil ferner mit wenigstens einer langgestreckten, geschlossenen Kammer ausgerüstet sein, welche mit Dämmstoff, beispielsweise Sand, gefüllt werden kann.

Zur besonders einfachen Montage der Vorrichtung kann der Träger aus drei seitlich miteinander verbundenen Strangprofilen bestehen, von denen das äussere Strangprofil eine mit Dämmstoff gefüllte Kammer umschliesst, das mittlere Strangprofil den Ölzufuhrkanal und Ölabflusskanal aufweist, auf das der Kunststoffstrang aufgesetzt ist, und das dritte Strangprofil die Kulisse für den Führungskörper der Vorschubstange trägt. An dem Deckel kann dann wenigstens ein am Maschinengestell angelenkter Hebel befestigt sein, mit dessen Arm ein Schwenkantrieb, etwa in der Form einer am Maschinengestell befestigten Kolbenzylindereinheit, gekoppelt ist.

Die Erfindung wird nachstehend anhand des in der beigefügten Zeichnung dargestellten Ausführungsbeispiels im einzelnen beschrieben. Es zeigen:

Fig. 1 die Ansicht eines Querschnitts einer Ausführungsform der Erfindung; und

Fig. 2 eine schematische Darstellung zur Erläuterung der Abschwenkbewegung des Deckels.

Auf einem nicht dargestellten Ständer ist die Stangenzuführvorrichtung hinter einem Drehautomaten montiert und hat eine Länge senkrecht zu den in den Figuren dargestellten Querschnittsansichten von mehreren Metern entsprechend jeweils einer dem Drehautomaten zuzuführenden Materialstange. Vor der Stangenzuführvorrichtung ist auf der Bedienungsseite, die in den Figuren der linken Seite entspricht, ein Stangenladegerät, beispielsweise in der aus der DE-OS 2 350 105 bekannten Bauweise, aufgestellt.

Die Stangenzuführvorrichtung und der obere Teil des Stangenladegeräts ist mit einer nicht dargestellten Haube abgedeckt.

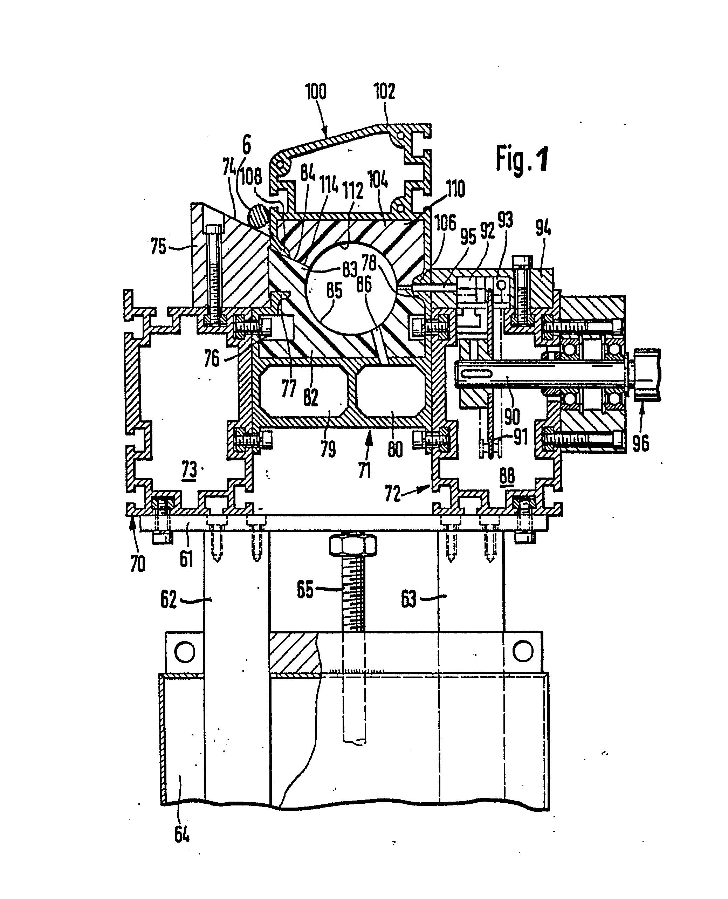

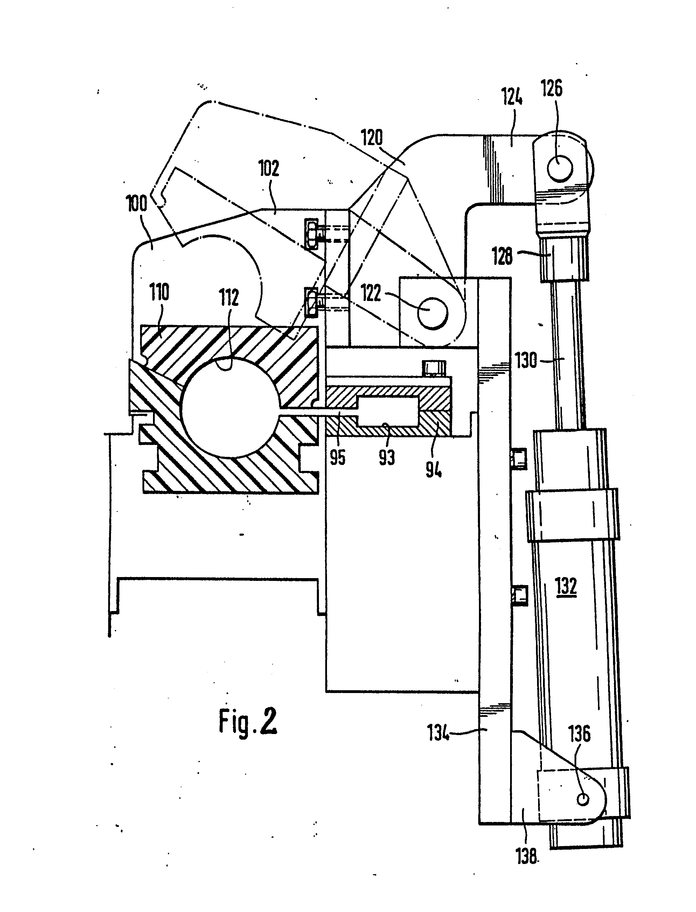

Die in Fig. 1 und 2 dargestellte Ausführungsform der erfindungsgemässen Stangenzuführvorrichtung ist auf einer Tischplatte 61 befestigt, welche auf massiven Ständern 62, 63 montiert ist. Mittels mehrerer Spindeln 65 ist die Tischplatte 61 relativ zum Fuss 64 in der Höhe verstellbar.

Ein Träger besteht aus drei Strangprofilen 70, 71, 72, die seitlich nebeneinander angeordnet und verschraubt sind. Die Strangprofile 70, 71, 72 erstrecken sich mindestens über die gesamte Länge einer zu verarbeitenden Materialstange. Das äussere, vordere Strangprofil 70 umschliesst eine Kammer 73, welche mit Dämmstoff, beispielsweise Sand, gefüllt werden kann. Das Strangprofil 70 ist auf der Oberseite des Tisches 61 verschraubt. Auf die Oberseite des vorderen Strangprofils 70 ist etwas zurückversetzt ein im Querschnitt trapezförmiger, langgestreckter Körper 75 als Beschickungsbühne aufgeschraubt, dessen Oberseite eine nach rückwärts und unten geneigte, ebene Einlauframpe 74 für eine Materialstange 6 aufweist.

An die Rückseite des vorderen Strangprofils 70 ist das mittlere Strangprofil 71 angeschraubt, das in einem oberen Abschnitt einen U-förmigen, nach oben offenen Kanal 76 mit am oberen Ende einwärts gerichteten Nasen 77, 78 aufweist. Unter dem Kanal 76 sind nebeneinander zwei im Querschnitt geschlossene Kanäle 79, 80 ausgebildet, von denen der vordere Kanal 79 als Ölrückflusskanal und der hintere Kanal 80 als Ölzufuhrkanal dient. Ölrückflusskanal 79 und Ölzufuhrkanal 80 sind in nicht dargestellter Weise über Ölleitungen mit einem Ölvorratsbehälter und einer Ölpumpe verbunden. In den U-Kanal 76 sind mehrere gleichgestaltete, in Längsrichtung aneinander gesetzte Kunststoff-Formblöcke eingesetzt, die aus Polyurethan bestehen und von denen ein Formblock 82 in Fig. 1 im Schnitt dargestellt ist. Der Formblock 82 ist in dem U-Kanal 76 durch die Nasen 77, 78 gehalten. Er besitzt vorne einen sich oberhalb der vorderen Nase 77 erstreckenden Rücken 83, der oben mit einer ebenen, nach rückwärts unten gerichteten Einlauffläche 84 endet, welche gegen die Einlauframpe 74 nach unten abgesetzt und auf die Mittellinie des Zuführrohres gerichtet ist. An der rückwärtigen Seite schliesst der Formblock 82 mit der Oberseite der hinteren Nase 78 ab. Zwischen dem Rücken 83 und dem hinteren Teil des Formblockes 82 ist eine im Querschnitt kreisbogenförmig gestaltete Rinne 85 ausgebildet. Vom Ölzufuhrkanal 80 führen mehrere über die Länge der Vorrichtung beabstandete Stichkanäle 86 durch die Formblöcke 82 in die Rinne 85. Da die Rinnen 85 aller Formblöcke 82 fluchten, bilden sie zusammen den unteren Teil eines Zuführrohres für eine Materialstange. Das hintere Strangprofil 72 umschliesst einen Kanal 88, in den an dem dem Drehautomaten zuweisenden Ende sowie am rückwärtigen Ende je eine Welle 90 mit aufgekeiltem Kettenrad 91 ragt. Um die beiden Kettenräder 91 läuft die im einzelnen nicht dargestellte Kette um, wobei sich in diesem Ausführungsbeispiel der Erfindung das untere Trumm der Kette frei durch den Kanal 88 erstreckt. Mit dem oberen Trumm der Kette ist ein Führungskörper 92 verbunden, der in einer Kulisse 93 eines auf die Oberseite des hinteren Strangprofils 72 aufgeschraubten Aufsatzes 94 parallel zum Führungsrohr verschiebbar ist. Durch das an der Rückseite des mittleren Strangprofils 71 anliegende Teil des Aufsatzes 94 erstreckt sich in Längsrichtung ein Längsschlitz 95 für die mit dem Führungskörper 92 einerseits und der Vorschubstange andererseits verbundene Fahne. Eine der Wellen 90 ist von einem an die Rückseite des hinteren Strangprofils 72 angeflanschten Elektromotor 96 angetrieben.

Der Deckel 100 besteht aus einem weiteren Strangprofil 102, an dessen Unterseite ein nach unten offener im Querschnitt U-förmiger Kanal 104 angeformt ist. Eine einwärts gerichtete, hintere Nase 106 und eine einwärts gerichtete vordere Nase 108 verankern in dem Kanal 104 mehrere langgestreckte, aus Polyurethan bestehende und in Längsrichtung aneinander gesetzte Kunststoff-Profilblöcke, von denen der Profilblock 110 in Fig. 1 im Schnitt dargestellt ist. Von der Unterseite ist in Ausrichtung auf die Rinne 85 in jeden Profilblock 110 ein im Querschnitt halbkreisförmiger Kanal 112 eingearbeitet, der nach rückwärts und unten mit der hinteren Nase 106 abschliesst und nach vorne in eine Schrägfläche 114 übergeht. Bei geschlossenem, aus den Kanälen 112 und Rinnen 85 umgrenzten Führungsrohr liegen die vorderen Schrägflächen 114 der Profilblöcke 110 mit der Unterseite der vorderen Nase 108 flächig auf der Einlauffläche 84 der Formblöcke 82 auf.

Fig. 2 zeigt schematisch die Ausbildung des Deckels 100, wobei zum Verständnis der Deckelbewegung nicht erforderliche Teile der Vorrichtung weggelassen sind. Der Deckel 100 ist über mehrere in Längsrichtung beabstandete, nach rückwärts abstehende Arme 120 auf einer Welle 122 befestigt, wobei an wenigstens einem der rückwärtigen Arme 120 ein Hebel 124 befestigt ist, der sich bezüglich der Welle 122 zu der vom Deckel 100 wegweisenden Seite erstreckt. Am rückwärtigen Ende ist in eine Bohrung des Hebels 124 ein Zapfen 126 eingesetzt, an welchen das gabelförmige Ende 128 eines Kolbens 130 angelenkt ist. Der Kolben 130 gehört zu einem Antriebsmotor, der einen Öl- oder Druckluftzylinder 132 aufweist. Die Welle 122 ist an dem jeweils oberen Ende mehrerer beabstandeter Pfosten 134 gelagert, die mit dem Tisch 61 oder den Ständern 63 verbunden sind. Der Zylinder 132 ist bei 136 an einem seitlichen Flansch 138 angelenkt.

Wie sich aus Fig. 2 unmittelbar ergibt, kann durch Betätigen der Kolbenzylindereinheit 130, 132 der Deckel 100 aus der mit ausgezogenen Strichen dargestellten, das Führungsrohr schliessenden Stellung bis in die gestrichelt angedeutete Stellung aufgeklappt werden, indem der Kolben 130 in den Zylinder 132 einfährt, wobei der Zylinder 132 eine leichte Schwenkbewegung um sein Lager 136 ausführt.

Vor dem Anheben des Deckels 100 wird die Ölpumpe so umgeschaltet, dass das im Führungsrohr enthaltene Öl über die Ölablaufleitung 79 soweit ablaufen kann, dass aus der Führungsrinne 85 bei geöffnetem Deckel 100 kein Öl seitlich austreten kann. Nach Betätigen der Kolbenzylindereinheit 132 wird der Deckel 100 nach oben zur Öffnung des Führungsrohres abgeschwenkt, so dass die in den Figuren dargestellte Materialstange 6 in die Führungsrinne 85 einrollen kann. Nach dem Schliessen des Deckels 100 durch entsprechende Betätigung der Kolbenzylindereinheit 132 wird das dem Drehautomaten abgewandte Ende der Materialstange 6 in an sich bekannter Weise von einem Greifer ergriffen und mit dem drehbaren Kupplungsteil einer Vorschubstange drehfest verbunden. Sodann wird durch Vorschieben der Vorschubstange das dem Drehautomaten benachbarte Ende der Materialstange in den Drehautomaten eingeführt, Öl in das geschlossene Führungsrohr eingeleitet und die Materialstange in die zu ihrer Bearbeitung im Drehautomaten erforderliche Umdrehung versetzt. Durch die schnelle Umdrehung der Materialstange wird das im Führungsrohr enthaltene Öl mitgerissen, so dass sich während des Vorschubs der rotierenden Materialstange 6 im Führungsrohr zwischen der Materialstange und der Innenwand der Führungsrinne 85 sowie des Kanals 112 eine Ölschicht ausbildet, in welche sich die Materialstange automatisch zentriert. Die rotierende Materialstange kommt daher mit der Führungsrinne 85 und dem Kanal 112 nicht in Berührung.

Diese Selbstzentrierung der Materialstange im Führungsrohr stellt sich sowohl bei relativ zum Durchmesser des Führungsrohres sehr dünnen Materialstangen wie auch bei solchen Materialstangen ein, die den Querschnitt des Führungsrohres nahezu ganz ausfüllen. Durch die Rotation der Materialstange im Ölbett tritt daher nur eine geringe Geräuschentwicklung auf und aufgrund der die rotierende Materialstange ganz umgebenden Ölschicht kann die Materialstange die Innenwand des Führungsrohres nicht verschleissen. Durch die Führung der Vorschubstange ausserhalb des Führungsrohres in der Kulisse 93 eröffnet sich ausserdem die Möglichkeit, Vorschubstangen unterschiedlicher Durchmesser zu verwenden. Eine Anpassung des Durchmessers der Vorschubstange an die lichte Weite des Führungsrohres ist nicht erforderlich.

Der besondere Vorteil dieser Ausführungsform ist die im Ganzen leichte Bauweise, da die Strangprofile 70, 71, 72, 102 aus Leichtmetall-Strangpressprofilen hergestellt sein können. Ferner sind die Strangprofile 70, 71, 72, 102 leicht zu montieren, was deren Ersatz bei Beschädigung oder Wartungsarbeiten wesentlich erleichtert. Hervorzuheben bei dieser Ausführungsform der Erfindung sind besonders die Kunststoff-Formblöcke 82 und -Profilblöcke 110, da für diese ein geräuschdämmender Werkstoff, beispielsweise Polyurethan gewählt werden kann. Dadurch, dass die vorgeschobene, rotierende Materialstange in dem mit Öl gefluteten Führungsrohr sich selbst zentriert, sind selbst bei kantigen Profilen der Materialstangen Beschädigungen der Innenkontur des Führungsrohres, also der Rinnen 85 und der Kanäle 112, nicht zu befürchten. Ferner schliesst der Deckel den Einlauf von der Beschickungsbühne 75 im Betrieb öldicht ab, da die Einlauffläche 84 gegen die Einlauframpe 74 abgesetzt ist, wobei die Vorderkante des Formteils 102 gegen das Ende der Ablauframpe 74, wie Fig. 2 zeigt, anliegt.

**Patentansprüche**

1. Stangenzuführvorrichtung mit einem in einem Träger (71) gelagerten Führungsrohr und einer in dem Führungsrohr axial beweglichen, mit einem Vorschubantrieb (90, 91, 92, 96) gekoppelten Vorschubstange, deren vorderes Ende ein drehbares Kupplungselement trägt, wobei das Führungsrohr aus einer in dem Träger ausgebildeten Führungsrinne (85) und einem nach oben bewegbaren, sich über die Länge der Führungsrinne erstreckenden Deckel (100) besteht, dadurch gekennzeichnet, dass wenigstens eine Ölzuflussleitung (80) mit der Führungsrinne (85), welche aus in Längsrichtung aneinandergesetzten und in den aus einem langgestreckten Profilteil (71) bestehenden Träger angeordneten Kunststoff-Formblöcken (82) besteht, gekoppelt und eine Ölrückflussleitung (79) derart vorgesehen ist, dass während des Vorschubs einer Materialstange (6) im vom schwenkbaren Deckel (100) geschlossenen Führungsrohr der Führungsrinne (85) durch die Ölzuflussleitung (80) Öl zugeführt ist.

2. Vorrichtung nach Anspruch 1, dadurch gekennzeichnet, dass der Deckel (100) aus einem Rahmenprofil (102) besteht, unter welchem ein weiterer aus in Längsrichtung aneinandergesetzten Kunststoff-Profilblöcken (110) bestehender Kunststoffstrang befestigt ist, in dessen Unterseite ein Führungskanal (112) ausgebildet ist.

3. Vorrichtung nach Anspruch 2, dadurch gekennzeichnet, dass die Kunststoff-Formblöcke (82) und -Profilblöcke (110) aus Polyurethan bestehen.

4. Vorrichtung nach einem der Ansprüche 1 bis 3, dadurch gekennzeichnet, dass das Profilteil (71) einen Ölzufuhrkanal (80) und einen Ölableitkanal (79) umschliesst, wobei der Ölzufuhrkanal über mehrere Stichkanäle (86) in die Führungsrinne (85) mündet.

5. Vorrichtung nach einem der vorstehenden Ansprüche, dadurch gekennzeichnet, dass ein wenigstens eine langgestreckte, mit Dämmstoff, beispielsweise Sand, gefüllte Kammer (73) aufweisendes Profilteil (70) vorgesehen ist.

6. Vorrichtung nach Anspruch 4, dadurch gekennzeichnet, dass drei seitlich miteinander verbundene Strangprofile (70, 71, 72) vorgesehen sind, von denen das äussere Strangprofil (70) eine mit Dämmstoff gefüllte Kammer (73) umschliesst, das mittlere Strangprofil (71) den Ölzufuhrkanal (80) und Ölableitkanal (79) aufweisenden Träger bildet, und das dritte Strangprofil (72) die Kulisse (93) für einen Führungskörper (92) der Vorschubstange bildet.

## Claims

1. A rod feed device having a guide tube supported in a carrier (25) and a feed-rod (7) which is axially movable in the guide tube and coupled to a feed drive and the front end of which carries a rotary coupling element, where the guide tube consists of a guide trough (4) made in the carrier and a cover (21) which may be moved upwards and extends over the length of the guide trough, characterised in that at least one oil inlet duct (12, 24; 80) is coupled to the guide trough (4; 85) which consists of moulded plastics blocks (82) laid against one another in the longitudinal direction and arranged in the carrier which consists of an elongated profiled part (71), and an oil return duct (14, 16; 79) is provided in such a way that during the advance of a rod (6) of material in the guide tube closed by the swinging cover (21; 100) oil is fed to the guide trough (4; 85) through the oil inlet duct (12, 24; 80).

2. A device as in Claim 1, characterised in that the cover (21; 100) consists of a frame profile (102) under which is fastened a further plastics strand consisting of profiled plastics blocks (110) laid against one another in the longitudinal direction, in the underside of which is formed a guide channel (112).

3. A device as in Claim 1 or 2, characterised in that the plastics strands consist of polyurethane.

4. A device as in any one of Claims 1 to 3, characterised in that the profiled part (71) underneath the plastics strand (82) encloses an oil feed channel (80) and an oil discharge channel (79), the oil feed channel opening into the guide trough (85) via a number of branch channels (86).

5. A device as in any one of the preceding claims, characterised in that the profiled part (71) has at least one elongated chamber (73) which is filled with insulating material, for example, sand.

6. A device as in any one of the preceding claims, characterised in that the carrier (25) consists of three profiled strands (70, 71, 72) connected together side by side, the outer profiled strand (70) of which encloses a chamber (73) filled with insulating material, the middle profiled strand (71) has the oil feed channel (80) and the oil drain channel (79), and the third profiled strand (72) forms the slideblock (93) for a guide body (92) of the feed-rod (7).

## Revendications

1. Dispositif d'alimentation en barres comprenant un tube de guidage logé dans un support (25) et une tige d'avancement (7) mobile axialement dans le tube de guidage, couplée à un système de commande de l'avancement, dont l'extrémité avant est munie d'un élément de couplage rotatif, le tube de guidage étant composé d'une gouttière de guidage (4) formée dans le support et d'un couvercle (21) mobile vers le haut, s'étendant sur la longueur de la gouttière de guidage, caractérisé en ce que il est prévu au moins une conduite d'alimentation en huile (12, 24; 80) couplée avec la gouttière de guidage (4; 85), constituée de blocs façonnés en matière plastique (82) disposés l'un près de l'autre dans le sens longitudinal et logés dans le support constitué d'une pièce profilée (71) allongée, et une conduite de retour d'huile (14, 16; 79), de sorte que pendant l'avance d'une barre (6) dans le tube de guidage fermé par le couvercle pivotant (21; 100), de l'huile est amenée à la gouttière de guidage (4; 85) par la conduite d'alimentation en huile (12, 24; 80).

2. Dispositif conforme à la revendication 1, caractérisé en ce que le couvercle (21; 100) est constitué d'un profil d'encadrement (102) sous lequel est fixée une autre bande en matière plastique, constituée de blocs profilés en matière plastique (110) disposés les uns à côté des autres dans le sens longitudinal, sur la face inférieure de laquelle est formé un conduit de guidage (112).

3. Dispositif conforme à l'une quelconque des revendications 1 ou 2, caractérisé en ce que les bandes en matière plastique sont en polyuréthane.

4. Dispositif conforme à l'une quelconque des revendications 1 à 3, caractérisé en ce que la

pièce profilée (71) entoure en-dessous de la bande en matière plastique (82) un conduit d'alimentation en huile (80) et une conduite d'écoulement d'huile (79), le conduit d'alimentation en huile débouchant dans la gouttière (85) de guidage par plusieurs conduits secondaires (86).

5. Dispositif conforme à l'une des revendications précédentes, caractérisé en ce que la pièce profilée (71) présente au moins une chambre allongée (73) qui est remplie de substance insonorisante, par exemple de sable.

6. Dispositif conforme à l'une des revendications précédentes, caractérisé en ce que le support (25) peut être constitué de trois profilés extrudés (70, 71, 72) liés les uns aux autres latéralement, le profilé extrudé extérieur (70) entourant une chambre (73) remplie de substance insonorisante, le profilé extrudé médian (71) comportant le conduit d'alimentation en huile (80) et le conduit d'écoulement d'huile (79), et le troisième profilé extrudé (72) supportant la coulisse (93) du corps de guidage (92) de la tige d'avancement (7).

**Fig. 1**

Fig.2